# EUROPÄISCHE PATENTSCHRIFT

(11) **EP 2 301 847 B1**
(45) Veröffentlichungstag und Bekanntmachung des Hinweises auf die Patenterteilung: **02.01.2013**
(21) Anmeldenummer: 09012313.4
(22) Anmeldetag: 29.09.2009
(51) Int. Cl.: B65B 3/04, B65B 3/30, B65B 37/16, B67C 3/02, G01F 11/02

(54) **Verfahren zum Betreiben einer Dosier- und Fülleinrichtung und Dosier- und Fülleinrichtung**
Method for operating a metering and filling device and metering and filling device
Procédé de fonctionnement d'un dispositif de dosage et de remplissage et dispositif de dosage et de remplissage

(43) Veröffentlichungstag der Anmeldung: 30.03.2011
(73) Patentinhaber: Firma Klaus Lipps, 09306 Rochlitz (DE)
(72) Erfinder: Lipps, Klaus, 09306 Rochlitz (DE)
(74) Vertreter: Dauster, Katja

(56) Entgegenhaltungen:
- DE-A1-102004 055 751
- DE-U1- 9 113 538

## Beschreibung

Die Erfindung betrifft ein Verfahren zum Betreiben einer Dosier- und Fülleinrichtung sowie eine Dosier- und Fülleinrichtung und ein System umfassend eine Dosier- und Fülleinrichtung und ein zu befüllendes Hohlgefäß.

Eine Dosier- und Fülleinrichtung zur Bereitstellung von individuellen Duftstoffen, Haarwaschmitteln und Kosmetika in Hohlgefäßen ist beispielsweise aus der DE 20 2007 002 055 U 1 bekannt. Bei der Dosier-und Fülleinrichtung sind Behältnisse mit Ausgangsstoffen für die Duftstoffe, Haarwaschmittel oder Kosmetika über jeweils eine Fördereinrichtung mit einem Mischraum in einer Mischeinrichtung verbunden.

Aus der DE 20 2008 001 224 U1 ist weiter eine Einrichtung zur Bereitstellung individuell gemischter Duftstoffe, Haarwaschmittel und Kosmetika in Hohlgefäßen mittels Fördereinrichtungen bekannt, wobei die Fördereinrichtungen mit einem Datenverarbeitungssystem zusammengeschaltet sind und das Datenverarbeitungssystem mit wenigstens einem Lesegerät, Schreibgerät oder kombinierten Lese-/Schreibgerät für mindestens einen externen und mobilen Datenspeicher verbunden ist.

Die Vorrichtungen sind beispielsweise in einem Frisiersalon einsetzbar, wobei individuell zusammengesetzte Produkte wie Haarwaschmittel, Haarstylingprodukte und/oder Haarpflegeprodukte in die beispielsweise als Flaschen ausgebildeten Hohlgefäße abgegeben werden können.

Es ist eine Aufgabe der vorliegenden Erfindung ein Verfahren zum Betreiben einer Dosier- und Fülleinrichtung sowie eine Dosier- und Fülleinrichtung zu schaffen, welche eine schnelle, dosierte Abgabe von Produkten in einem kurzen Zeitfenster ermöglicht.

Diese Aufgabe wird gelöst durch ein Verfahren zum Betreiben einer Dosier- und Fülleinrichtung zur Abgabe von Fluiden an mindestens einer Austragsvorrichtung, insbesondere zur Abgabe von Flüssigkeiten, wie Duftstoffen, Haarwaschmitteln und/oder fließfähigen Kosmetika, wobei eine mit der mindestens einen Austragsvorrichtung verbundene Fördereinrichtung durch Ansaugen eines in einem Vorratsbehältnis bevorrateten Ausgangsstoffs in einen Bereitschafts-Modus gebracht wird.

Das Überführen der Einrichtung in einen Bereitschafts-Modus, auch als Vor-Ladung bezeichnet, ermöglicht es, bei einer Entnahme eines Produkts über die Austragsvorrichtung in einem vorbestimmten Zeitfenster zu bleiben. Beispielsweise ist vorgesehen, dass eine Entnahme verschiedener Produkte nacheinander im Abstand von ca. 30 sec. bis ca. 3 Minuten möglich ist.

In einer vorteilhaften Ausgestaltung ist vorgesehen, dass nach Abbau eines beim Ansaugen entstehenden Unterdrucks ein Weg zwischen der Fördereinrichtung und dem Vorratsbehältnis mittels eines Ventils geschlossen wird. Dadurch, dass das Ventil erst nach einem Abbau des Unterdrucks schließt, kann ein Lufteinschluss verhindert werden.

Vorzugsweise wird nach Ablauf einer definierten Wartezeit zum Abbau eines beim Ansaugen entstehenden Unterdrucks ein Weg zwischen der Fördereinrichtung und dem Vorratsbehältnis mittels einem Ventil geschlossen. Die Wartzeit ist je nach Beschaffenheit des Ausgangsstoffs geeignet festlegbar. Beispielsweise haben sich Wartezeiten von ca. 1 Minute als vorteilhaft herausgestellt.

Die Aufgabe wird weiter gelöst durch eine Dosier- und Fülleinrichtung zur Bereitstellung von Fluiden an mindestens einer Austragsvorrichtung, insbesondere zur Bereitstellung von viskosen Flüssigkeiten, wie Duftstoffen, Haarwaschmitteln und/oder Kosmetika, umfassend mindestens ein Vorratsbehältnis zum Bevorraten eines Ausgangsstoffs und mindestens eine zwischen dem mindestens einem Vorratsbehältnis und der mindestens einen Austragsvorrichtung angeordnete Fördereinrichtung, wobei mindestens ein Steuerungsmodul zum Ansteuern der Fördereinrichtung gemäß dem erfindungsgemäßen Verfahren vorgesehen ist.

Vorzugsweise umfasst die Fördereinrichtung ein 3/2-Wegeventil, insbesondere ein 3/2-Magnetventil. Durch 3/2-Wegeventile kann die Anzahl an notwendigen Ventilen reduziert werden. Insbesondere ein Magnetventil ermöglicht eine schnelle Ansteuerung mittels einem Steuerungsmodul.

In einer weiteren Ausgestaltung umfasst die Fördereinrichtung eine mittels einer elektromotorischen Antriebseinrichtung angetriebene Kolbenpumpe. Eine Kolbenpumpe ermöglicht eine gute und exakte Dosierung des Ausgangsstoffs. Vorzugsweise ist die Antriebseinrichtung als Linearantrieb mit Wegmessung, insbesondere mit Wegmessung mittels Potentiometer gestaltet. Ein analoges Signal des Potentiometers ist dabei vorzugsweise mittels dem Steuerungsmodul geeignet auswertbar.

In einer vorteilhaften Ausgestaltung ist vorgesehen dass das Steuerungsmodul die Fördereinrichtung zur dosierten Abgabe eines Ausgangsstoffs wie folgt ansteuert. In einem ersten Schritt steuert das Steuerungsmodul ein Ventil, vorzugsweise ein Magnetventil, derart an, dass ein Weg zwischen der zugehörigen Kolbenpume und dem Vorratsbehälter des Ausgangsstoffs geöffnet wird. Anschließend wird der Linearantrieb angesteuert, um einen Kolben zum Ansaugen des Ausgangsstoffs aus dem Vorratsbehälter zu betreiben. Beim Ansaugen entsteht ein Unterdruck von ca. -1 bar in einer der Kolbenpumpe zugeordneten Saugleitung gegenüber dem Umgebungsdruck. Um den Unterdruck abzubauen bleibt das Magnetventil vorzugsweise noch ca. 30 sec bis ca. 3 min geöffnet, bis sich der Druck in der Saugleitung annähernd auf den Umgebungsdruck eingestellt hat. Das Steuerungsmodul steuert anschließend den Linearantrieb zur Abgabe einer gewünschten Menge des Ausgangsstoffs an. Mittels des Potentiometers ist eine geförderte Menge überwachbar. Entsprechend der Einstellung bezüglich der gewünschten Menge wird der Linearantrieb gestoppt. Anschließend wird die Fördereinrichtung mittels dem Steuerungsmodul wieder in einen Bereitschafts-Modus gebracht. Hierzu wird der Linearantrieb derart angesteuert, dass der Kolben wieder unter Ansaugen des Ausgangsstoffs in eine Grundstellung fährt. Nach einer Minute Wartezeit zum Abbau des Unterdrucks ist eine erneute Entnahme an der Austragsvorrichtung möglich.

Vorzugsweise ist eine Sensoreinrichtung zum Erfassen eines unterhalb der mindestens einen Austragsvorrichtung anzuordneten Hohlgefäßes vorgesehen. Das Hohlgefäß ist beispielsweise als Flasche, Becher oder anderes Behältnis ausgebildet. In einer anderen Ausgestaltung ist ein als Nachfüllpackung gestalteter Beutel an der Austragsvorrichtung anbringbar. In einer Ausgestaltung ist beispielsweise ein Unterstellen eines Hohlgefäßes mittels eines optischen Sensors erfassbar. Alternativ oder zusätzlich ist mittels der Sensoreinrichtung beispielsweise eine Größe und/oder ein Füllstand eines unterhalb der mindestens einen Austragsvorrichtung angeordneten Hohlgefäßes erfassbar. Die Informationen über das erfasste Hohlgefäß sind an das Steuerungsmodul übertragbar. Dabei erfolgt in einer Ausgestaltung eine Dosierung entsprechend einer erfassten Größe des Hohlgefäßes. Vorzugsweise werden mittels der Dosier- und Fülleinrichtung geeignet geformte Hohlgefäße befüllt. Die Größe ist beispielsweise mittels mechanischer Klappen und zugehörigen induktiven Sensoren erfassbar. Insbesondere wenn im Vorfeld definierte Hohlgefäße in bekannten Größen verwendet werden, ist eine derartige Überwachung kostengünstig realisierbar. Ein Füllstand eines Vorratsbehältnisses ist beispielsweise mittels eines kapazitiven Sensors erfassbar.

In einer weiteren Ausgestaltung ist eine Signaleinrichtung vorgesehen, durch die eine erfasste Position und/oder eine Sollposition eines untergestellten Hohlgefäßes signalisierbar ist, insbesondere optisch und/oder akustisch. Eine Sollposition ist dabei in einer Ausgestaltung durch eine Beleuchtung signalisierbar. Dabei ist in einer Ausgestaltung vorgesehen, dass die Farbe wechselt oder die Beleuchtung abgeschaltet wird, sobald ein richtig untergestelltes Hohlgefäß erfasst wird. In anderen Ausgestaltungen bleibt die Beleuchtung an, bis eine alternative Auswahl für eine Befüllung getroffen wird.

In einer weiteren Ausgestaltung ist eine Überwachungseinrichtung zum Überwachen der Dosier- und Fülleinrichtung vorgesehen, insbesondere eine Überwachungseinrichtung mit mindestens einem Regensensor zur Überwachung eines Überlaufs und/oder mit mindestens einem Sensor, insbesondere einem induktiven Sensor, für einen Eingriffsschutz. Der Regensensor umfasst in einer Ausgestaltung eine Lichtquelle, insbesondere eine Leuchtdiode, und eine detektierende Fotodiode, wobei auftretende Feuchtigkeit aufgrund einer Änderung eines Reflexionsverhaltens detektiert wird. In einer anderen Ausgestaltung umfasst der Regensensor einen elektrischen Kondensator. In wieder anderen Ausgestaltungen ist ein kapazitiver Regensensor vorgesehen. Mittels des Regensensors sind auftretende Undichtigkeiten oder dergleichen innerhalb oder außerhalb eines Gehäuses der Dosier- und Fülleinrichtung erfassbar. Vorzugsweise ist zudem ein Eingriff in ein Gehäuse insbesondere in den Bereich der Fördereinrichtungen während einem Betrieb derselben verhindert. Zu diesem Zweck sind in einer Ausgestaltung induktive Sensoren vorgesehen, durch welche erfassbar ist, ob Nachfüll- oder Servicetüren oder Öffnungen des Gehäuses ordnungsgemäß verschlossen sind. Sofern die Türen nicht verschlossen sind, verhindert das Steuerungsmodul vorzugsweise ein Starten der Fördereinrichtungen und/oder stoppt eine laufende Fördereinrichtung. In wieder einer anderen Ausgestaltung ist vorgesehen, dass die Überwachungseinrichtung einen Sensor zum Überwachen eines Füllstands der Vorratsbehältnisse umfasst, beispielsweise einen kapazitiven Sensor. Sofern ein Vorrat nicht ausreicht, um eine gewünschte Fördermenge zu fördern, wird vorzugsweise ein Starten der Fördereinrichtungen verhindert.

In einer weiteren Ausgestaltung ist eine Mensch-Maschine-Schnittstelle umfassend eine Anzeigeeinheit, eine Scan-Einrichtung und/oder einen Kartenleser vorgesehen. Dabei können Kundendaten beispielsweise auf einem Etikett eines Hohlgefäßes und/oder einer Karte gespeichert sein. Das Etikett kann mittels der Scan-Einrichtung eingelesen werden. Die Scan-Einrichtung umfasst zu diesem Zweck in einer Ausgestaltung ein Mikroskop mit einem USB-Anschluss, über welchen erfasste Daten an das Steuerungsmodul leitbar sind. In einer anderen Ausgestaltung ist vorgesehen, dass Daten auf einer Karte gespeichert sind und das Steuerungsmodul entsprechend der eingelesenen Daten die Fördereinrichtungen ansteuert wird. Dabei ist beispielsweise denkbar, dass die Karten durch Bezahlen an der Kasse geladen werden und der Kunde die Dosier- und Fülleinrichtung selbst durch Einschieben der Karte bedient.

In einer weiteren Ausgestaltung ist eine Etikettiervorrichtung vorgesehen. Mittels der Etikettiervorrichtung ist ein individuelles Etikett entsprechend der individuellen Befüllung druckbar.

Die Aufgabe wird weiter gelöst durch ein System umfassend eine erfindungsgemäße Dosier- und Fülleinrichtung und ein Hohlgefäß, welcher unterhalb der mindestens einen Austragsvorrichtung anordenbar und mittels der Dosier- und Fülleinrichtung befüllbar ist. Die Dosier- und Fülleinrichtung und das Hohlgefäß sind vorzugsweise aufeinander abgestimmt. Dabei ist es beispielsweise denkbar, Hohlgefäße in zwei Füllgrößen, beispielsweise in den Füllgrößen 250ml und 100ml, vorzusehen. Die Hohlgefäße sind vorzugsweise durch mechanische und/oder elektrische Mittel markiert. Eine Befüllung erfolgt dabei nur, wenn ein entsprechend markiertes Hohlgefäß untergestellt ist. Dadurch wird eine Verschmutzung der Einrichtung aufgrund einer Verwendung von unsachgemäßen Flaschen oder Bechern als Hohlgefäße verhindert. Die Hohlgefäße werden vorzugsweise nach dem Befüllen verschlossen. Dabei ist in einer Ausgestaltung vorgesehen, die Hohlgefäße durch einen Verschluss mit einem Spender zu verschließen. Dies ist insbesondere bei wasserähnlichen oder hochviskosen Flüssigkeiten vorteilhaft. Vorzugsweise werden Hohlgefäße aus Kunststoff aufgrund eines geringen Gewichts verwendet. Für eine ansprechende Optik sind Kunststoffe mit Glasoptik vorteilhaft.

Weitere Vorteile der Erfindung ergeben sich aus den Unteransprüchen und aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1:: eine schematische Darstellung einer Frontansicht einer er- findungsgemäßen Dosier- und Fülleinrichtung,
- Fig. 2:: eine perspektivische Darstellung der Dosier- und Fülleinrich- tung gemäß Fig. 1 und
- Fig. 3:: eine schematische Darstellung von Fördereinrichtungen für eine Dosier- und Fülleinrichtung gemäß Fig. 1.

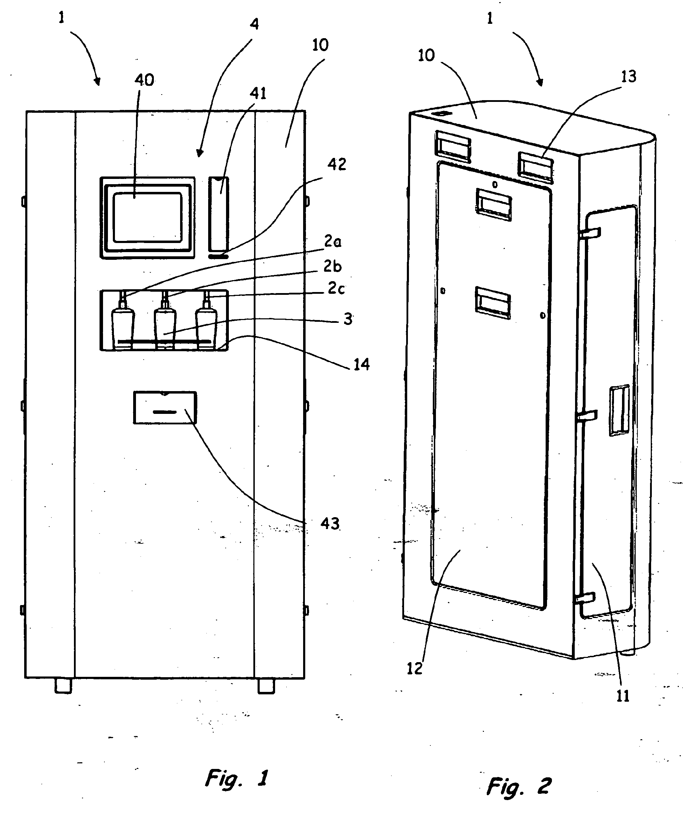

Fig. 1 und 2 zeigen schematisch eine erfindungsgemäße Dosier- und Fülleinrichtung 1 in einer Frontansicht (Fig. 1) bzw. einer perspektivischen Darstellung, in welcher eine Rückseite und ein Seitenteil sichtbar sind (Fig. 2). Die dargestellte Dosier- und Fülleinrichtung 1 umfasst drei Austragsvorrichtungen 2a, 2b, 2c zum Abgeben von Fluiden. In dem dargestellten Ausführungsbeispiel dient die Dosier- und Fülleinrichtung 1 zum Befüllen von Hohlgefäßen 3, beispielsweise von Flaschen, mit verschiedenen Haarpflegeprodukten. Die an den Austragsvorrichtungen 2a - 2c abgegebenen Produkte sind aus einem Ausgangsstoff oder mehreren Ausgangsstoffen zusammengesetzt. Die Ausgangsstoffe sind in Vorratsbehältnissen (nicht sichtbar in Fig. 1 und 2) bevorratet, welche in einem Gehäuse 10 der Dosier- und Fülleinrichtung 1 vorgesehen sind. Ein Nachfüllen und/oder Austauschen der Vorratsbehältnisse ist über eine Tür 11 möglich. Für einen Zugriff auf im Inneren des Gehäuses 10 vorgesehene Fördereinrichtungen und dergleichen ist an der Rückseite, wie in Fig.2 erkennbar, eine Servicetür vorgesehen.

Um ein einfaches Handhaben der Dosier- und Fülleinrichtung 1 bei einem Transport und/oder bei einem Aufstellen an einem geeigneten Ort zu ermöglichen, sind an einer Rückseite des Gehäuses 10 der Dosier-und Fülleinrichtung 1 Handgriffe 13 vorgesehen. In einer anderen Ausgestaltung sind alternativ oder zusätzlich Rollen vorgesehen.

An der Dosier- und Fülleinrichtung 1 ist eine Standfläche 14 vorgesehen, auf welcher ein beispielsweise als Flasche gestaltetes Hohlgefäß 3 unter einer der Austragsvorrichtungen 2a, 2b oder 2c platzierbar ist.

Die Dosier- und Fülleinrichtung 1 ist beispielsweise in einem Frisiersalon vorteilhaft verwendbar. Dabei ist in einer Ausgestaltung vorgesehen, dass über die Austragsvorrichtung 2a ein Haarwaschmittel oder Shampoo abgegeben wird, über die Austragsvorrichtung 2b ein Styling-Produkt und über die Austragsvorrichtung 2c ein Haarpflegeprodukt. Ein über eine der Austragsvorrichtungen 2a, 2b oder 2c abgegebenes Produkt, wie ein Haarwaschmittel, ein Styling-Produkt und/oder ein Haarpflegeprodukt, ist für die Verwendung in dem Frisiersalon und/oder für einen Kunden in geeignete Hohlgefäße 3 abfüllbar.

Über eine Mensch-Maschine-Schnittstelle 4 ist durch einen Nutzer eine gewünschte Befüllung des untergestellten Hohlgefäßes 3 vorgebbar. Die Mensch-Maschine-Schnittstelle 4 umfasst in der dargestellten Ausführungsform eine Anzeigeeinheit 40, eine Scan-Einrichtung 41, einen Kartenleser 42, und einen Drucker 43. In der dargestellten Ausführungsform ist die Anzeigeeinheit 40 zumindest teilweise berührungssensitiv ausgebildet, so dass die Anzeigeeinheit 40 auch als Eingabeeinheit fungiert. In anderen Ausgestaltungen sind zusätzlich Bedienelemente für eine Eingabe vorgesehen, beispielsweise eine Tastatur oder ein Mikrofon für eine Spracheingabe. Die Scan-Einrichtung 41 umfasst in dem dargestellten Ausführungsbeispiel ein in einem Klappfach angeordnetes Mikrospkop. Über die Scan-Einrichtung 41 und/oder den Kartenleser 42 sind Daten für eine Befüllung ablesbar. Der Drucker 43 ist in dem dargestellten Ausführungsbeispiel in einem Schubfach angeordnet, so dass eine platzsparende Unterbringung gegeben ist. Durch den Drucker 43 kann ein entsprechendes Etikett erzeugt werden.

Nachdem über die Anzeigeeinheit 40, die Scan-Einrichtung 41 und/oder den Kartenleser 42 ein Produktwunsch eingegeben wurde, wird dem Nutzer vorzugsweise optisch signalisiert, unter welcher Austragsvorrichtung 2a, 2b oder 2c ein zu befüllendes Hohlgefäß 3 anzuordnen ist.

Sobald ein entsprechendes Hohlgefäß 3 unter der entsprechenden Austragsvorrichtung 2a, 2b oder 2c angeordnet wurde, wird vorzugsweise eine Abgabe gestartet. Eine Fehlbedienung, beispielsweise wenn kein geeignetes Hohlgefäß 3 untergestellt wird und/oder ein Hohlgefäß 3 unterhalb einer falschen Austragsvorrichtung 2a, 2b oder 2c angeordnet wird, ist in einer vorteilhaften Ausgestaltung durch eine Sensoreinrichtung erfassbar. Ein Erkennen eines untergestellten Hohlgefäßes ist beispielsweise mittels eines optischen Sensors (nicht dargestellt) möglich. In einer anderen Ausgestaltung ist ein Kraftsensor vorgesehen, mittels dem ein untergestelltes Hohlgefäß 3 erfassbar ist. Vorzugsweise ist dabei anhand der Größe und/oder anhand des erfassten Gewichts auch ein Fassungsvermögen des untergestellten Hohlgefäßes 3 erfassbar.

Die Austragsvorrichtungen 2a - 2c sind jeweils über eine ebenfalls in Fig. 1 und 2 nicht sichtbare Fördereinrichtung mit mindestens einem der Vorratsbehältnisse verbunden. Dabei können mehrere Vorratsbehältnisse mit einer gemeinsamen Austragsvorrichtungen 2a, 2b oder 2c verbunden sein, so dass die Ausgangsstoffe beim Austragen gemischt werden. Zu diesem Zweck ist in einer Ausgestaltung an den Austragsvorrichtungen 2a, 2b und 2c jeweils eine Mischeinrichtung vorgesehen, wie sie beispielsweise in DE 20 2007 002 055 U1 beschrieben ist, auf deren Inhalt hiermit voll umfänglich Bezug genommen wird.

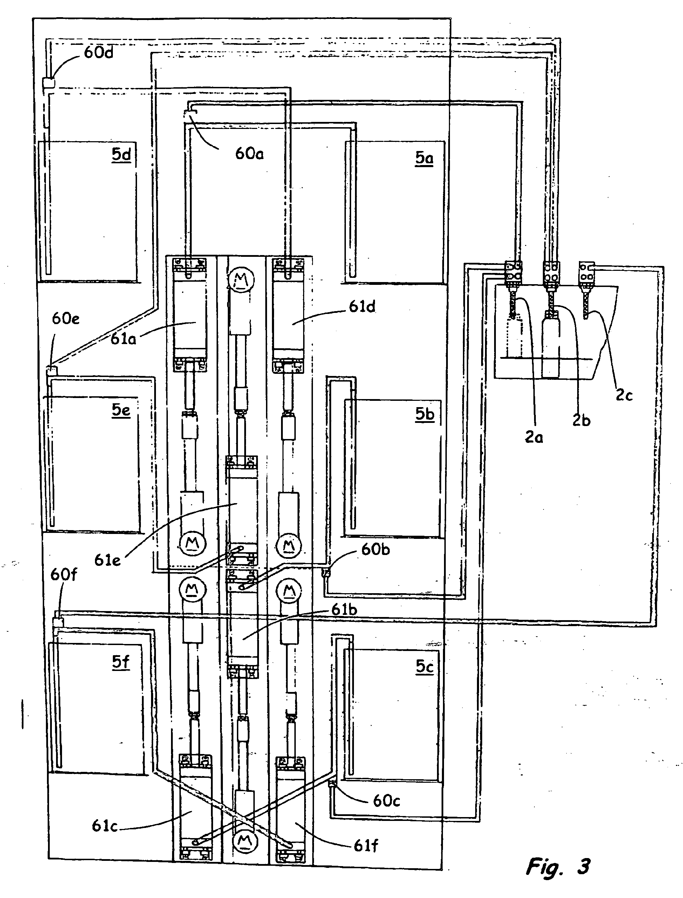

Fig. 3 zeigt schematisch einen Hydraulikplan für eine Ausführungsform einer erfindungsgemäßen Dosier- und Fülleinrichtung 1 mit drei Austragsvorrichtungen 2a, 2b und 2c gemäß Fig. 1. Die verschiedenen, an den Austragsvorrichtungen 2a, 2b und 2c abgegebenen Produkte sind aus mehreren Ausgangsstoffen zusammenstellbar. In dem dargestellten Ausführungsbeispiel sind drei Ausgangsstoffe in Vorratsbehältnissen 5a, 5b, 5c zum individuellen Zusammenstellen für ein Haarwaschmittel oder Shampoo, das über die Austragsvorrichtung 2a abgegeben wird, vorgesehen. Daneben sind zwei Ausgangsstoffe in Vorratsbehältnissen 5d, 5e für ein über die Austragsvorrichtung 2b abzugebendes Stylingprodukt vorgesehen. Für ein über die Austragsvorrichtung 2c abzugebendes Pflegeprodukt ist dagegen nur ein Ausgangsstoff in einem Vorratsbehälter 5f vorgesehen. In anderen Ausgestaltungen sind andere Konfigurationen vorgesehen.

In dem dargestellten Ausführungsbeispiel fasst jedes Vorratsbehältnis 5a - 5f maximal 10 Liter des Ausgangsstoffs. Die Vorratsbehältnisse sind als starre Behälter ausgestaltet. In anderen Ausgestaltungen sind Faltbeutel oder dergleichen als Vorratsbehältnisse vorgesehen.

Zwischen den Vorratsbehältnissen 5a - 5f und den zugehörigen Austragsvorrichtungen 2a - 2c sind Fördereinrichtungen umfassend jeweils ein 3/2-Wegeventil 60a - 60f und eine Kolbenpumpe 61a - 61f vorgesehen. Die Kolbenpumpen 61a - 61f werden jeweils von einem zugehörigen Linearantrieb M zum Ansaugen eines Ausgangsstoff in eine Saugleitung und zum Abgeben des Ausgangsstoffs in Richtung der Austragsvorrichtungen 2a - 2c angetrieben. Das zugehörige 3/2-Wegeventil 60a - 60f ist dabei beim Ansaugen derart eingestellt, dass ein Weg zwischen dem Vorratsbehältnis 5a - 5f und der zugehörigen Saugleitung freigegeben ist und ein Weg zu den Austragsvorrichtungen 2a bis 2c gesperrt ist. Zum anschließenden Abgeben des Ausgangsstoffs wird das zugehörige 3/2-Wegeventil 60a - 60f umgestellt, so dass der Weg zwischen dem Vorratsbehältnis 5a - 5f und der zugehörigen Saugleitung gesperrt und ein Weg zu den Austragsvorrichtungen 2a bis 2c freigegeben ist, und der zugehörige Linearantrieb M wird entsprechend betrieben.

In dem dargestellten Ausführungsbeispiel sind die 3/2-Wegeventil 60a - 60f als Magnetventile ausgebildet. Für ein schnelles Abgeben von Produkten über die Austragsvorrichtungen 2a - 2c, ist vorgesehen, dass die Dosier- und Fördereinrichtung 1 in einen Bereitschafts-Modus gebracht wird.

Um die Dosier- und Fülleinrichtung 1 in den Bereitschafts-Modus für einen Ausgangsstoff zu überführen, öffnet zunächst ein zugehöriges 3/2-Wegeventil einen Weg zwischen dem Vorratsbehälter 5a - 5f und der zugehörigen Kolbenpumpe 61a - 61f. Anschließend wird durch Antrieb des Kolbens der Ausgangsstoff in einen Zylinder der Kolbenpumpe 61 a-61f und eine zugehörige Saugleitung gesaugt. Um einen beim Ansaugen entstehenden Unterdruck abzubauen, bleibt das zugehörige Magnetventil 60a - 60f nach dem Ansaugen zunächst geöffnet. Eine zusätzliche Öffnungszeit wird in einer Ausgestaltung für den zugehörigen Ausgangsstoff geeignet festgelegt. Beispielsweise beträgt die zusätzliche Öffnungszeit ca. 1 Minute. In anderen Ausgestaltungen wird ein Druck überwacht und das zugehörige Magnetventil 60a - 60f bei Erreichen eines Schaltdrucks, beispielsweise bei Erreichen eines Umgebungsdrucks, geschlossen. Das Magnetventil 60a - 60f wird anschließend in Richtung Auslass freigegeben.

Auf Anforderung, beispielsweise über die in Fig. 1 dargestellte Mensch-Maschine-Schnittstelle, wird der Linearantrieb M zum Antreiben der Kolbenpumpe 61a - 61f angetrieben. Durch Antreiben eines Kolbens der Kolbenpumpe 61a - 61f wird nun eine gewünschte Menge des Ausgangsstoffs über die entsprechende Austragsvorrichtung 2a - 2c abgegeben. Dabei erfolgt vorzugsweise eine Bewegung des Kolbens mit einem Hub entsprechend einer auszutragenden Menge des Ausgangsstoffes. Eine geförderte Menge ist vorzugsweise über einen Potentiometer an dem zugehörigen Linearantrieb M abfragbar und der Linearantrieb M bei Erreichen der gewünschten Menge stoppbar.

Nach dem Austragen des Ausgangsstoffs an die zugehörige Austragsvorrichtung 2a - 2c wird die zugehörige Fördereinrichtung wieder in einen Bereitschafts-Modus gebracht.

Durch die erfindungsgemäße Dosier- und Fülleinrichtung 1 kann für jeden Ausgangsstoff zunächst eine Bereitstellung erfolgen, so dass anschließend innerhalb von kurzen Zeitfenstern, beispielsweise von Zeitfenstern von einer Minute pro zu füllendem Hohlgefäß 3, eine Abgabe der Haarpflegeprodukte möglich ist.

Über eine in Fig. 1 dargestellte Mensch-Maschine-Schnittstelle 6 kann eine bestimmte Zusammensetzung für das abzugebende Produkt eingestellt werden. Anschließend wird das zugehörige Hohlgefäß 3 entsprechend dieser Zusammensetzung individuell befüllt.

Um ein gutes Durchmischen der Ausgangsstoffe zu erzielen, ist vorzugsweise in jeder der Austragsvorrichtungen 2a - 2c eine Mischschnecke vorgesehen, durch welche verschiedene Ausgangsstoffe miteinander vermengt werden. Die Mischschnecken sind dabei vorzugsweise feststehend angeordnet.

Ein Nennvolumen der Kolbenpumpen 61a - 61f ist vorzugsweise größer als ein maximales Füllvolumen eines zugehörigen Hohlgefäßes 3. Beispielsweise ist das Nennvolumen ca. 20% größer als ein maximales Füllvolumen.

Die Hohlgefäße 3 sind nach dem Befüllen verschließbar. Dabei ist in einer Ausgestaltung vorgesehen, dass ein Verschließen mittels einer Spendeeinrichtung erfolgt. Die Dosier- und Fülleinrichtung 1 weist in einer vorteilhaften Ausgestaltung weiter eine Etikettiereinrichtung oder einen Drucker 43 auf, wobei individuelle Etiketten entsprechend dem individuell abgegebenen Produkt erstellt, insbesondere gedruckt werden.

Solange die Dosier- und Fördereinrichtung 1 in einem Bereitschafts-Modus betrieben wird, ist die Anzeigeeinheit 40 zum Anzeigen von Präsentationen oder dergleichen Nutzbar. Die Dosier- und Fördereinrichtung weist 1 daher in einer Ausgestaltung einen Anschluss, insbesondere einen VGA- Anschluss zur Verbindung mit weiteren PeripherieGeräten auf.

## Patentansprüche

1. Verfahren zum Betreiben einer Dosier- und Fülleinrichtung (1) zur Abgabe von Fluiden an mindestens einer Austragsvorrichtung (2a - 2c), insbesondere zur Abgabe von Flüssigkeiten, wie Duftstoffen, Haarwaschmitteln und/oder fließfähigen Kosmetika, **dadurch gekennzeichnet, dass**
eine mit der mindestens einen Austragsvorrichtung (2a - 2c) verbundene Fördereinrichtung (60a - 60f, 61a - 61f), umfassend eine elektromotorische Antriebseinrichtung (M) und eine Kolbenpumpe (61a - 61f), durch Ansaugen eines in einem Vorratsbehältnis (5a - 5f) bevorrateten Ausgangsstoffs in einen Bereitschafts-Modus gebracht wird, wobei die Kolbenpumpe (61a - 61f) mittels der elektromotorischen Antriebseinrichtung (M) zum Ansaugen des Ausgangsstoffs in eine Saugleitung und zum Abgeben des Ausgangsstoffs in Richtung der Austragsvorrichtung (2a - 2c) angetrieben wird.

2. Verfahren nach Anspruch 1, **dadurch gekennzeichnet, dass** nach Abbau eines beim Ansaugen entstehenden Unterdrucks ein Weg zwischen der Fördereinrichtung (60a - 60f, 61a - 61f) und dem Vorratsbehältnis mittels eines Ventils geschlossen wird.

3. Verfahren nach Anspruch 1 oder 2, **dadurch gekennzeichnet, dass** nach Ablauf einer definierten Wartezeit zum Abbau eines beim Ansaugen entstehenden Unterdrucks ein Weg zwischen der Fördereinrichtung (60a - 60f, 61a - 61f) und dem Vorratsbehältnis mittels eines Ventils geschlossen wird.

4. Dosier- und Fülleinrichtung zur Bereitstellung von Fluiden an mindestens einer Austragsvorrichtung (2a - 2c), insbesondere zur Bereitstellung von Flüssigkeiten, wie Duftstoffen, Haarwaschmitteln und/oder fließfähigen Kosmetika, umfassend mindestens ein Vorratsbehältnis (5a - 5f) zum Bevorraten eines Ausgangsstoffs und mindestens eine zwischen dem mindestens einem Vorratsbehältnis (6a - 6f) und der mindestens einen Austragsvorrichtung (2a - 2c) angeordnete Fördereinrichtung (60a - 60f, 61 a - 61f),
**dadurch gekennzeichnet, dass**
die Fördereinrichtung (60a - 60f, 61a - 61f) eine mittels einer e-lektromotrischen Antriebseinrichtung (M) angetriebene Kolbenpumpe (61a - 61f) umfasst und
mindestens ein Steuerungsmodul zum Ansteuern der mindestens einen Fördereinrichtung (60a - 60f, 61a - 61f) gemäß dem Verfahren nach einem der Ansprüche 1 bis 3 vorgesehen ist.

5. Dosier- und Fülleinrichtung nach Anspruch 4, **dadurch gekennzeichnet, dass** die Fördereinrichtung (61a - 61f) ein 3/2-Wegeventil (60a - 60f), insbesondere ein 3/2-Magnetventil umfasst.

6. Dosier- und Fülleinrichtung nach Anspruch 4 oder 5, **dadurch gekennzeichnet, dass** die Antriebseinrichtung (M) als Linearantrieb mit Wegmessung, insbesondere mit Wegmessung mittels Potentiometer gestaltet ist.

7. Dosier- und Fülleinrichtung nach einem der Ansprüche 4 bis 6, **dadurch gekennzeichnet, dass** eine Sensoreinrichtung zum Erfassen eines unterhalb der mindestens einen Austragsvorrichtung anzuordneten Hohlgefäßes (3) vorgesehen ist.

8. Dosier- und Fülleinrichtung nach Anspruch 7, **dadurch gekennzeichnet, dass** mittels der Sensoreinrichtung eine Größe und/oder ein Füllstand eines unterhalb der mindestens einen Austragsvorrichtung angeordneten Hohlgefäßes (3) erfassbar ist.

9. Dosier- und Fülleinrichtung nach einem der Ansprüche 4 bis 8, **dadurch gekennzeichnet, dass** eine Signaleinrichtung vorgesehen ist, durch die eine erfasste Position und/oder eine Sollposition eines untergestellten Hohlgefäßes (3), vorzugsweise optisch und/oder akustisch, signalisierbar ist.

10. Dosier- und Fülleinrichtung nach einem der Ansprüche 4 bis 9, **dadurch gekennzeichnet, dass** eine Überwachungseinrichtung zum Überwachen der Dosier- und Fülleinrichtung (1) vorgesehen ist, insbesondere eine Überwachungseinrichtung mit mindestens einem Regensensor zur Überwachung eines Überlaufs und/oder mit mindestens einem Sensor, insbesondere einem induktiven Sensor, für einen Eingriffsschutz.

11. Dosier- und Fülleinrichtung nach einem der Ansprüche 4 bis 10, **dadurch gekennzeichnet, dass** eine Mensch-Maschine-Schnittstelle (4) umfassend eine Anzeigeeinheit (40), eine Scan-Einrichtung (41) und/oder einen Kartenleser (42) vorgesehen ist.

12. Dosier- und Fülleinrichtung nach einem der Ansprüche 4 bis 11, **dadurch gekennzeichnet, dass** eine Etikettiervorrichtung vorgesehen ist.

13. System umfassend eine Dosier- und Fülleinrichtung nach einem der Ansprüche 4 bis 12 und ein Hohlgefäß (3), welcher unterhalb der mindestens einen Austragsvorrichtung (2a - 2c) anordenbar und mittels der Dosier- und Fülleinrichtung (1) befüllbar ist.

14. System nach Anspruch 13, **dadurch gekennzeichnet, dass** das Hohlgefäß (3) eine durch die Dosier- und Fülleinrichtung (1) erfassbare Markierung aufweist.

## Claims

1. A method for operating a dosing and filling device (1) for dispensing fluids via at least one dispensing device (2a - 2c), in particular for dispensing liquids such as flavors, shampoos and/or free-flowing cosmetics, **characterized in that**
a transport system (60a - 60f, 61a -61f), comprising an electric motor drive system (M) and a piston pump (61a - 61f), is connected to the at least one dispensing device (2a - 2c) and transferred into a ready state by suction of a basic material stored in a reservoir (5a - 5f), wherein the piston pump (61a - 61f) is driven by the electric motor drive system (M) for suctioning the basic material into a suction channel and for dispensing the basic material in the direction of the discharge device (2a - 2c).

2. The method according to claim 1, **characterized in that** after reduction of a negative pressure generated during suctioning, a path between the transport system (60a - 60f, 61a - 61f) and the reservoir is closed by means of a valve.

3. The method according to claim 1 or 2, **characterized in that** after expiration of a predefined waiting period for reduction of a negative pressure generated during suctioning, a path between the transport system (60a - 60f, 61a - 61f) and the reservoir is closed by means of a valve.

4. A dosing and filling device for providing fluids via at least one dispensing device (2a - 2c), in particular for providing liquids such as flavors, shampoos and/or free-flowing cosmetics, comprising at least one reservoir (5a - 5f) for storing a basic material and at least one transport system (60a - 60f, 61a - 61f) arranged between the at least one reservoir (6a-6f) and the at least one dispensing device (2a - 2c),
**characterized in that**
the transport system (60a - 60f, 61a - 61f) comprises a piston pump (61a - 61f) driven by an electric motor drive system (M) and
at least one control module for controlling the at least one transport system (60a - 60f, 61a-61f) in accordance with the method according to any of the claims 1 to 3.

5. The dosing and filling device according to claim 4, **characterized in that** the transport system (61a - 61f) comprises a 3/2 directional control valve (60a - 60f), in particular a 3/2 magnetic valve.

6. The dosing and filling device according to claim 4 or 5, **characterized in that** the drive system (M) is designed as a linear drive with path measurement, in particular with path measurement by means of a potentiometer.

7. The dosing and filling device according to any of the claims 4 through 6, **characterized in that** a sensor device is provided for detecting a hollow vessel (3) to be arranged underneath the at least one dispensing device.

8. The dosing and filling device according to claim 7, **characterized in that** a size and/or a fill level of a hollow vessel (3) arranged underneath the at least one dispensing device can be detected by means of the sensor device.

9. The dosing and filling device according to any of the claims 4 to 8, **characterized in that** a signal device is provided by means of which a detected position and/or a desired position of a hollow vessel (3) put underneath can be output as a signal, preferably optically and/or acoustically.

10. The dosing and filling device according to any of the claims 4 to 9, **characterized in that** a monitoring device is provided for monitoring the dosing and filling device (1), in particular a monitoring device having at least one rain sensor for monitoring an overflow and/or having at least one sensor, in particular an inductive sensor, for a reach-in protection.

11. The dosing and filling device according to any of the claims 4 to 10, **characterized in that** a man-machine interface (4) comprising a display unit (40), a scan device (41) and/or a card reader (42) is provided.

12. The dosing and filling device according to any of the claims 4 to 11, **characterized in that** a labeling device is provided.

13. A system comprising a dosing and filling device according to any of the claims 4 to 12 and a hollow vessel (3) which can be arranged underneath the at least one dispensing device (2a - 2c) and which can be filled by means of the dosing and filling device (1).

14. The system according to claim 13, **characterized in that** the vessel (3) has a mark which can be detected by the dosing and filling device (1).

## Revendications

1. Procédé de fonctionnement d'un dispositif de dosage et de remplissage (1) pour la délivrance de fluides à au moins un dispositif de retrait (2a-2c), en particulier pour la délivrance de liquides tels que des parfums, des shampooings et/ou des cosmétiques fluides, **caractérisé en ce qu'**un dispositif de transport (60a-60f, 61a-61f) relié audit au moins un dispositif de retrait (2a-2c), comportant un dispositif d'entraînement par moteur électrique (M) et une pompe à piston (61a-61f), est amené en mode de fourniture par aspiration d'une matière de départ stockée dans un réservoir de stockage (5a-5f), dans lequel la pompe à piston (61a-61f) est entraînée au moyen du dispositif d'entraînement à moteur électrique (M) pour l'aspiration de la matière de départ dans une conduite d'aspiration et pour la délivrance de la matière de départ en direction du dispositif de retrait (2a-2c).

2. Procédé selon la revendication 1, **caractérisé en ce que**, après la suppression d'une dépression créée lors de l'aspiration, un chemin entre le dispositif de transport (60a-60f, 61a-61f) et le réservoir de stockage est fermé au moyen d'une soupape.

3. Procédé selon la revendication 1 ou 2, **caractérisé en ce que**, après expiration d'un temps d'attente défini pour la suppression d'une dépression créée lors de l'aspiration, un chemin entre le dispositif de transport (60a-60f, 61a-61f) et le réservoir de stockage est fermé au moyen d'une soupape.

4. Dispositif de dosage et de remplissage pour la fourniture de fluides à au moins un dispositif de retrait (2a-2c), en particulier pour la fourniture de liquides tels que des parfums, des shampooings et/ou des cosmétiques fluides, comprenant au moins un réservoir de stockage (5a-5f) pour stocker une matière de départ et au moins un dispositif de transport (60a-60f, 61a-61f) disposé entre ledit au moins un réservoir de stockage (6a-6f) et ledit au moins un dispositif de retrait (2a-2c), **caractérisé en ce que** le dispositif de transport (60a-60f, 61a-61f) comprend une pompe à piston (61a-61f) entraînée au moyen d'un dispositif d'entraînement à moteur électrique (M) et il est prévu au moins un module de commande pour commander ledit au moins un dispositif de transport (60a-60f, 61a-61f) conformément au procédé selon l'une quelconque des revendications 1 à 3.

5. Dispositif de dosage et de remplissage selon la revendication 4, **caractérisé en ce que** le dispositif de transport (61a-61f) comprend une soupape à 3/2 voies (60a-60f), en particulier une soupape magnétique à 3/2 voies.

6. Dispositif de dosage et de remplissage selon la revendication 4 ou 5, **caractérisé en ce que** le dispositif d'entraînement (M) est formé par un entraînement linéaire avec mesure du chemin, en particulier avec mesure du chemin au moyen de potentiomètres.

7. Dispositif de dosage et de remplissage selon l'une quelconque des revendications 4 à 6, **caractérisé en ce qu'**il est prévu un dispositif de capteur pour détecter un récipient creux (3) disposé en dessous dudit au moins un dispositif de retrait.

8. Dispositif de dosage et de remplissage selon la revendication 7, **caractérisé en ce qu'**une grandeur et/ou un niveau de remplissage d'un récipient creux (3) disposé en dessous dudit au moins un dispositif de retrait peut être détecté au moyen du dispositif de capteur.

9. Dispositif de dosage et de remplissage selon l'une quelconque des revendications 4 à 8, **caractérisé en ce qu'**il est prévu un dispositif de signalisation, par lequel une position détectée et/ou une position de consigne d'un récipient creux sous-jacent (3) peut être signalée, de préférence de façon optique et/ou acoustique.

10. Dispositif de dosage et de remplissage selon l'une quelconque des revendications 4 à 9, **caractérisé en ce qu'**il est prévu un dispositif de surveillance pour surveiller le dispositif de dosage et de remplissage (1), en particulier un dispositif de surveillance avec au moins un détecteur de pluie pour la surveillance d'un débordement et/ou avec au moins un capteur, en particulier un capteur inductif, pour une protection contre une intervention.

11. Dispositif de dosage et de remplissage selon l'une quelconque des revendications 4 à 10, **caractérisé en ce qu'**il est prévu une interface homme-machine (4) comprenant une unité d'affichage (40), un dispositif de scannage (41) et/ou un lecteur de carte (42).

12. Dispositif de dosage et de remplissage selon l'une quelconque des revendications 4 à 11, **caractérisé en ce qu'**il est prévu un dispositif d'étiquetage.

13. Système comprenant un dispositif de dosage et de remplissage selon l'une quelconque des revendications 4 à 12 et un récipient creux (3), qui peut être disposé en dessous dudit au moins un dispositif de retrait (2a-2c) et qui peut être rempli au moyen du dispositif de dosage et de remplissage (1).

14. Système selon la revendication 13, **caractérisé en ce que** le récipient creux (3) présente un marquage détectable par le dispositif de dosage et de remplissage (1).
